# EUROPÄISCHE PATENTSCHRIFT

(11) **EP 1 260 535 B1**
(45) Veröffentlichungstag und Bekanntmachung des Hinweises auf die Patenterteilung: **11.07.2007**
(21) Anmeldenummer: 02009116.1
(22) Anmeldetag: 24.04.2002
(51) Int. Cl.: C08G 65/332

(54) **Verwendung von wasserlöslichen Polymerisaten von Estern aus Acrylsäure und Alkylpolyalkylenglycolen als Mahlhilfsmittel für zementöse Systeme.**
Use of water-soluble polymers from esters of acrylic acid and alkylpolyalkylene glycols as milling agents for cement.
Utilisation de polymères d'esters hydrosolubles ä partir d'acide acrylique et de alkylpolyalkylène glycols comme adjuvants de broyage.

(30) Priorität: 22.05.2001 DE 10125237
(43) Veröffentlichungstag der Anmeldung: 27.11.2002
(73) Patentinhaber: BASF Aktiengesellschaft, 67056 Ludwigshafen (DE)
(72) Erfinder: Kroner, Matthias, Dr., 67304 Eisenberg (DE); Büchner, Karl-Heinz, 68804 Altlussheim (DE); Brodt, Gregor, Dr., 64646 Heppenheim (DE)

(56) Entgegenhaltungen:
- EP-A- 0 884 290
- EP-A- 0 989 108
- WO-A-01/40337
- WO-A-01/94518
- US-B1- 6 214 958

## Beschreibung

Die vorliegende Erfindung betrifft die Verwendung wasserlöslicher Polymerisate von Estern aus Acrylsäure und Alkylpolyalkylenglykolen, welche erhältlich sind durch azeotrope Veresterung einer Mischung von Acrylsäure und Alkylpolyalkylenglykol im Molverhältnis von 2 bis 3 : 1 in Gegenwart eines organischen Lösungsmittels, das mit Wasser ein Azeotrop bildet, zu mindestens 85 Gew.-%, bezogen auf das Alkylpolyalkylenglykol, und anschließende radikalische Polymerisation des bei der Veresterung erhaltenen Gemisches in wäßrigem Medium, wobei man das organische Lösungsmittel während der Polymerisation azeotrop aus dem Reaktionsgemisch abdestilliert und das abdestillierte Wasser in das Gemisch zurückführt oder durch Zufuhr von frischem Wasser ersetzt, als Mahlhilfsmittel für zementöse Systeme.

Wasserlösliche Polymerisate auf Basis von Polycarbonsäure-Alkylpolyalkylenglykol-Estern sind aufgrund ihrer besonders guten Dispergierung von Zement in wäßrigen Suspensionen von zunehmendem technischen Interesse für die Bauindustrie, wo sie als Betonverflüssiger eingesetzt werden. Sie lösen dabei die bisherigen Betonverflüssiger auf Basis von Melamin- oder Naphthalin-Formaldehyd-Sulfonaten ab, da sie eine bedeutend höhere Dispergierfähigkeit besitzen.

Bei den bislang bekannten Polycarbonsäure-Alkylpolyethylenglykol-Estern besteht noch der Nachteil, daß sie im Verlauf der Anwendung als Betonverflüssiger an Wirksamkeit verlieren und die Fließfähigkeit von Beton schlechter wird. Dies ist besonders bei Transportbeton problematisch, bei dem die Fließfähigkeit im Mischwerk eingestellt wird. Der Beton sollte bei der Verarbeitung auf der Baustelle noch dieselben Fließeigenschaften haben. Deshalb wird heute noch vielfach Verflüssiger auf der Baustelle nachdosiert, was zu schwankender Qualität des Betons führen kann.

Aus der EP-A-989 108 sind Dispergiermittel für Beton auf Basis polymerer Ester von Acrylsäure und Methylpolyethylenglykol bekannt, die durch azeotrope Veresterung von Acrylsäure und Methylpolyethylenglykol (M_{w} 472) im Molverhältnis 3,35 : 1 in Cyclohexan, anschließenden Ersatz des Cyclohexans durch zugesetztes Wasser mittels azeotroper Destillation und Polymersiation der erhaltenen 80 gew.-%igen wäßrigen Esterlösung in Wasser hergestellt werden. Es handelt sich hierbei um einen dreistufigen Herstellungsprozeß, bei dem im Destillationsschritt auch Probleme mit der Verunreinigung der Apparatur durch mitabdestillierte Acrylsäure auftreten, weshalb die Zuführung eines Polymerisationsinhibitors in den Kühler erforderlich ist. Außerdem zeigen die auf diese Weise erhaltenen Verbindungen nichtzufriedenstellende Anwendungseigenschaften.

In der älteren deutschen Patentanmeldung 199 57 177.5 werden Dispergiermittel auf Basis polymerer Ester von Methacrylsäure und Methylpolyethylenglykol beschrieben.

Der Erfindung lag die Aufgabe zugrunde, Mahlhilfsmittel bereitzustellen, die sich durch vorteilhafte Anwendungseigenschaften auszeichnen, und auf wirtschaftliche Weise herzustellen sind.

Demgemäß wurde die Verwendung der eingangs definierten wasserlöslichen Polymerisate von Estern aus Acrylsäure und Alkylpolyalkylenglykolen gefunden.

Zur Herstellung der erfindungsgemäßen Polymerisate wird ein Gemisch von Acrylsäure und Alkylpolyalkylenglykol im Molverhältnis 2 bis 3 : 1, bevorzugt von 2,2 bis 3 : 1 und besonders bevorzugt von 2,5 bis 3 : 1 eingesetzt, das einer vorzugsweise sauer katalysierten, azeotropen Veresterung unterworfen wird. Die überschüssige, nicht mit dem Alkylpolyalkylenglykol reagierende Acrylsäure verbleibt in der bei der Veresterung erhaltenen Mischung und reagiert als Comonomer bei der anschließenden radikalischen Polymerisation.

Manchmal kann es von Vorteil sein, wenn zur Veresterung zusätzlich zu der Acrylsäure bis zu 0,5 mol einer weiteren monoethylenisch ungesättigten Carbonsäure, bzw. einem Carbonsäurederivat wie Maleinsäure, Maleinsäureanhydrid oder Fumarsäure, eingesetzt werden. Bevorzugt wird die Veresterung jedoch in Abwesenheit dieser Säuren vorgenommen.

Die azeotrope Veresterung der Acrylsäure mit dem Alkylpolyalkylenglykol erfolgt in Gegenwart eines organischen Lösungsmittels, das mit Wasser ein Azeotrop bildet, und kann nach an sich bekannten Verfahren vorgenommen werden. Das organische Lösungsmittel wird dabei auch als Schleppmittel bezeichnet. Bei der azeotropen Veresterung wird das bei der Reaktion entstehende Wasser azeotrop aus dem Reaktionsgemisch entfernt.

Die Veresterung wird mindestens soweit geführt, bis ein Umsatz von 85 Gew.-%, vorzugsweise mindestens 90 Gew.-%, bezogen auf das Alkylpolyalkylenglykol, erreicht ist. Der Umsatz kann dabei anhand der Abnahme der Säurezahl (Acrylsäure) oder der OH-Zahl (Alkylpolyalkylenglykol) des Reaktionsgemisches verfolgt werden. Außerdem besteht nach der Polymerisation die Möglichkeit, mit Hilfe von Gelpermeationschromatographie-Untersuchungen (GPC) den unveresterten Anteil an Alkylpolyalkylenglykol neben dem Polymer zu ermitteln.

Als veresterndes Alkylpolyalkylenglykol eignen sich erfindungsgemäß insbesondere Verbindungen der allgemeinen Formeln

R¹-(O-CHR²-CHR³)ₙ-OH und R¹-(O-CH₂-CH₂-CH₂-CH₂)ₙ-OH

in denen die Variablen folgende Bedeutung haben:
- R¹: C₁-C₅₀-Alkyl, bevorzugt C₁-C₄-Alkyl, oder C₁-C₁₈-Alkylphenyl;
- R², R³: unabhängig voneinander Wasserstoff, Methyl oder Ethyl;
- n: 5 bis 90.

Das Molgewicht M_{w} der Alkylpolyalkylenglykole beträgt in der Regel 350 bis 4000, bevorzugt 500 bis 2000, besonders bevorzugt 750 bis 1500 und ganz besonders bevorzugt etwa 1000.

Besonders bevorzugt werden Alkylpolyethylenglykole und ganz besonders bevorzugt Methylpolyethylenglykole der genannten Molgewichte eingesetzt.

Weiterhin sind als Alkylpolyalkylenglykol auch Alkyl- (insbesondere Methyl)-polyalkylenglykole geeignet, die Einheiten von Propylenoxid und/oder Butylenoxid in Kombination mit Einheiten von Ethylenoxid enthalten. Gleiche Einheiten können dabei blockweise oder statistisch angeordnet sein.

Beispiele hierfür sind Methylpolyalkylenglykole, die durch Anlagerung von Ethylenoxid und Propylenoxid an einwertige aliphatische Alkohole, insbesondere durch Anlagerung von
5 mol Ethylenoxid und 1 mol Propylenoxid,
5 mol Ethylenoxid und 3 mol Propylenoxid,
5 mol Ethylenoxid und 10 mol Propylenoxid,
10 mol Ethylenoxid und 1 mol Propylenoxid,
10 mol Ethylenoxid und 3 mol Propylenoxid,
10 mol Ethylenoxid und 10 mol Propylenoxid,
20 mol Ethylenoxid und 1 mol Propylenoxid,
20 mol Ethylenoxid und 3 mol Propylenoxid,
20 mol Ethylenoxid und 10 mol Propylenoxid,
25 mol Ethylenoxid und 1 mol Propylenoxid,
25 mol Ethylenoxid und 3 mol Propylenoxid bzw.
25 mol Ethylenoxid und 10 mol Propylenoxid
an 1 mol Methanol, Ethanol, n-Propanol, Isopropanol oder Butanol erhältlich sind.

Es kann auch teilverethertes Polytetrahydrofuran eingesetzt werden, das einseitig als Endgruppe eine Alkylgruppe, vorzugsweise eine C₁-C₄-Alkylgruppe, trägt.

Die Wirksamkeit der Copolymerisate im jeweiligen zementösen System läßt sich manchmal erhöhen, wenn Mischungen aus Alkylpolyalkylenglykolen mit unterschiedlichen Molgewichten eingesetzt werden.

Geeignete Mischungen haben beispielsweise folgende Zusammensetzungen:
30 Gew.-% Methylpolyethylenglykol (M_{w} 350) und 70 Gew.-% Methylpolyethylenglykol (M_{w} 1000),
50 Gew.-% Methylpolyethylenglykol (M_{w} 350) und 50 Gew.-% Methylpolyethylenglykol (M_{w} 2000),
70 Gew.-% Methylpolyethylenglykol (M_{w} 350) und 30 Gew.-% Methylpolyethylenglykol (M_{w} 4000),
30 Gew.-% Methylpolyethylenglykol (M_{w} 500) und 70 Gew.-% Methylpolyethylenglykol (M_{w} 1000),
30 Gew.-% Methylpolyethylenglykol (M_{w} 500) und 70 Gew.-% Methylpolyethylenglykol (M_{w} 2000),
30 Gew.-% Methylpolyethylenglykol (M_{w} 750) und 70 Gew.-% Methylpolyethylenglykol (M_{w} 1000),
30 Gew.-% Methylpolyethylenglykol (M_{w} 750) und 70 Gew.-% Methylpolyethylenglykol (M_{w} 2000),
50 Gew.-% Methylpolyethylenglykol (M_{w} 1000) und 50 Gew.-% Methylpolyethylenglykol (M_{w} 2000),
90 Gew.-% Methylpolyethylenglykol (M_{w} 1000) und 10 Gew.-% Methylpolyethylenglykol (M_{w} 4000),
90 Gew.-% Methylpolyethylenglykol (M_{w} 1000) und 10 Gew.-% Methylpolypropylenglykol (M_{w} 1350),
90 Gew.-% Methylpolyethylenglykol (M_{w} 1000) und 10 Gew.-% Methylpolypropylenglykol (M_{w} 2000) und
90 Gew.-% Methylpolyethylenglykol (M_{w} 1000) und 10 Gew.-% Methylpolyethylenglykol/Methylpropylenglykol-Copolymer im Molverhältnis 90:10 (M_{w} 1000).

Zweckmäßigerweise wird die Veresterung in Gegenwart eines Katalysators vorgenommen. Als Katalysator können dabei alle organischen und anorganischen Säuren eingesetzt werden. Beispiele für geeignete saure Katalysatoren sind Schwefelsäure, schweflige Säure, Di- und Polyschwefelsäure, Schwefeltrioxid, Methansulfonsäure, Benzolsulfonsäure, p-Toluolsulfonsäure, C₂-C₃₀-Alkylbenzolsulfonsäuren, Schwefelsäuremonoester von C₁-C₃₀-Alkoholen und Alkylpolyalkylenglykolen, Phosphorsäure, phosphorige Säure, unterphosphorige Säure, Polyphosphorsäure, Salzsäure, Perchlorsäure und saure Ionenaustauscher. Bevorzugt sind p-Toluolsulfonsäure und Methansulfonsäure, besonders bevorzugt ist p-Toluolsulfonsäure.

Die Menge an Katalysator, bezogen auf die Summe aus Acrylsäure und Alkylpolyalkylenglykol, beträgt im allgemeinen bis zu 10 Gew.-%, bevorzugt 0,05 bis 7 Gew.-% und besonders bevorzugt 0,1 bis 5 Gew.-%.

Als Schleppmittel bei der Veresterung geeignete organische Lösungsmittel sind aliphatische (isoaliphatische und linearaliphatische), cycloaliphatische, aliphatisch-aromatische und rein aromatische Kohlenwasserstoffe. Der Siedepunkt besonders geeigneter organischer Lösungsmittel liegt in der Regel bei 60 bis 300°C, vorzugsweise bei 70 bis 150°C.

Beispiele für geeignete organische Lösungsmittel sind im einzelnen:
n-Paraffine wie Hexan, Decan, Undecan, Dodecan und Octadecan; Isoparaffine wie Isooctan, Isodecan, Isododecan, Isohexadecan und Isooctadecan;
Cycloparaffine wie Cyclohexan, Methylcyclohexan und Dimethylcyclohexan;

Aromaten wie Benzol, Toluol, o-, m- und p-Xylol, Xylolgemische, Trimethylbenzol, Tetramethylbenzol, Mesitylen, Ethylbenzol, Isopropylbenzol, n-Butylbenzol und Isobutylbenzol.

Bevorzugt sind dabei Cyclohexan, Methylcyclohexan, Toluol, Xylolgemische und o-Xylol, wobei Toluol besonders bevorzugt ist.

Es können auch technisch verfügbare, einen Siedebereich aufweisende Mischungen aus verschiedenen organischen Lösungsmitteln verwendet werden. Solche Mischungen werden auch als Spezialbenzine, Petroleumbenzine, Siedegrenzenbenzine, Naphtha und Petroletherfraktionen bezeichnet. Sie fallen oft als Raffineriefraktionen an und können durch Oligomerisierungen und Hydrierungen gezielt aus Steamcracker-Olefinen hergestellt werden. Beispiele für solche Siedegrenzenbenzine sind Benzine mit Siedebereichen von 90 bis 100°C, 100 bis 140°C und 140 bis 160°C. Die Fraktionen können je nach Herkunft rein linearaliphatisch, rein isoaliphatische, rein aliphatisch-aromatische oder rein aromatische Bestandteile enthalten.

Übersichten zu den technisch zugänglichen Kohlenwasserstoffgemischen sind zu finden in: Kirk-Othmer, Encyclopedia of Chemical Technology, 1995, Vol. 13, Seiten 744 ff, Kapitel Hydrocarbons, und Vol. 12, Seiten 126 ff, Kapitel Fuels, sowie Seiten 341 ff, Kapitel Gasoline; Ullmann's Encyclopedia of Industrial Chemistry, 1989, Vol. A13, Seiten 227-281, im Kapitel Hydrocarbons, und Vol. A16, Seiten 719-755, im Kapitel Motor Fuels.

Das Schleppmittel bildet zusammen mit Wasser ein azeotropes Gemisch, das in der Regel einen Siedepunkt unter dem des niedriger siedenden Bestandteils aufweist. Die Siedepunkte der azeotropen Gemische liegen bevorzugt im Bereich von 70 bis 130°C.

Der Anteil an Schleppmittel in der Reaktionmischung beträgt üblicherweise 5 bis 50 Gew.-%, bevorzugt 10 bis 40 Gew.-%, bezogen auf die Summe aus Acrylsäure und Alkylpolyalkylenglykol. Die Menge an Schleppmittel wird dabei erfindungsgemäß vorteilhaft so gewählt, daß das Schleppmittel in der Reaktionsmischung einen Siedepunkt von 100 bis 150°C, vorzugsweise 110 bis 140°C, besitzt. Die Siedepunkte der Azeotrope und der Schleppmittel sind in der bei der Veresterung vorliegenden Mischung meist höher als die der reinen Substanzen.

Um das einseitig endgruppenverschlossene Alkylpolyalkylenglykol während der Veresterung vor oxidativem Abbau zu schützen, können gewünschtenfalls Reduktionsmittel zugesetzt werden. Geeignete Reduktionsmittel sind z.B. Phosphorverbindungen wie hypophosphorige Säure und phosphorige Säure und Schwefelverbindungen wie Schwefeldioxid, Thiosulfat und Dithionit. Selbstverständlich können auch Reduktionsmittelmischungen zum Einsatz kommen.

Wenn Reduktionsmittel eingesetzt wird, dann beträgt die Menge im allgemeinen bis zu 5 Gew.-%, bevorzugt bis 2 Gew.-%, bezogen auf Alkylpolyalkylenglykol.

Um eine vorzeitige Polymerisation der Acrylsäure und der Acrylsäureester zu verhindern, werden dem bei der Veresterung eingesetzten Gemisch vorteilhaft übliche Polymerisationsinhibitoren wie Phenothiazin, Hydrochinonmonomethylether oder Di-tert.-butyl-p-kresol zugesetzt.

In der Regel liegt die Inhibitormenge bei 0,001 bis 2 Gew.-%, vorzugsweise bei 0,005 bis 0,5 Gew.-%, bezogen auf die Acrylsäure.

Die Veresterung wird üblicherweise bei 80 bis 200°C, bevorzugt bei 90 bis 170°C und besonders bevorzugt bei 110 bis 140°C durchgeführt.

Zweckmäßigerweise wird die Veresterung unter inerten Bedingungen vorgenommen. Vorteilhaft leitet man während der Veresterung einen Stickstoffstrom durch die Reaktionsmischung, wodurch das Abdestillieren des Azeotrops unterstützt wird. Bevorzugt leitet man pro h das 0,1 bis 5-fache, insbesondere das 0,5 bis 2-fache Volumen des Reaktorinhalts an Stickstoff durch die Reaktionsmischung.

Verfahrenstechnisch geht man vorteilhaft so vor, daß man das Azeotrop in einem Wärmetauscher kondensiert und in einem Phasentrenngefäß in eine obere organische Phase und eine untere Wasserphase trennt. Durch eine entsprechende Rohrleitungsführung leitet man die organische Phase wieder in den Veresterungsreaktor zurück. Als Veresterungsreaktor eignen sich dabei alle üblicherweise verwendeten Destillationsapparate, z.B. Rührkesselreaktoren, Blasendestillationsapparate mit und ohne Umwälzkreis, Dünnschichtverdampfer, Fallfilmverdampfer und Rohrbündelverdampfer.

Der Verlauf der Veresterung kann verfolgt werden, indem die gebildete Menge Wasser, die Säurezahl und/oder die OH-Zahl des Reaktionsgemisches an Proben titrimetrisch ermittelt wird.

Die Veresterung wird so weit geführt, bis die Wassermenge nicht mehr zunimmt bzw. die Säurezahl oder OH-Zahl nicht mehr abnimmt. In Abhängigkeit vom Alkoxylierungsgrad des Alkylpolyalkylenglykols benötigt man hierfür unterschiedliche Zeiten. Je höher der Alkoxylierungsgrad ist, um so länger dauert die Veresterung.

Das organische Lösungsmittel kann nach abgeschlossener Veresterung in der Veresterungsmischung verbleiben. Üblicherweise enthalten die Mischungen 10 bis 40 Gew.-%, vorzugsweise 15 bis 30 Gew.-%, organisches Lösungsmittel.

Die erhaltenen Veresterungsmischungen enthalten üblicherweise weiterhin neben Katalysator und Inhibitoren folgende Monomere, die bei der anschließenden radikalischen Polymerisation reagieren können: Acrylsäure, Acrylsäure-Alkylpolyalkylenglykol-Ester, Polyalkylenglykoldiacrylsäure-Ester in Mengen unter 5 Gew.-%, bevorzugt unter 3 Gew.-%, und unverestertes Alkylpolyalkylengkylol in Mengen unter 10 Gew.-%.

Die erhaltenen flüssigen Veresterungsmischungen sind bei 10 bis 100°C, insbesondere bei 30 bis 60°C, mindestens 8 Wochen lagerfähig, ohne Hydrolyse zu zeigen. Sie sind gut fließfähig und pumpbar und weisen bei 40°C Viskositäten < 100 mPas auf. Für die anschließende Polymerisation können sie ohne vorherige Reinigungsoperation eingesetzt werden.

Die radikalische Polymerisation der Veresterungsmischung erfolgt in wäßrigem Medium, wobei gleichzeitig das organische Lösemittel durch azeotrope Destillation aus dem Polymerisationsreaktor entfernt wird.

Im Gegensatz zu dem in der EP-A-989 108 beschriebenen Polymerisationsverfahren ist beim erfindungsgemäßen Verfahren während der gesamten Polymerisation immer organisches Lösungsmittel in kleinen Mengen anwesend und beeinflußt damit die Löslichkeit und das Polymerisationsverhalten der Monomeren positiv. Die Mengen an organischem Lösungsmittel sind annähernd konstant, da das organische Lösungsmittel ständig durch das Veresterungsprodukt in den Polymerisationsreaktor eingetragen wird und gleichzeitig durch azeotrope Destillation ständig aus dem Reaktor entfernt wird. Es bildet sich somit während der Polymerisation eine Gleichgewichtskonzentration an organischem Lösungsmittel von etwa 0,01 bis 5 Gew.-%, bezogen auf das wäßrige Polymerisatlösung, aus.

Als Polymerisationsinitiator können alle bekannten wasserlöslichen Peroxo- und Azoinitiatoren eingesetzt werden. Besonders bevorzugte Polymerisationsinitiatoren sind Wasserstoffperoxid und Natrium-, Kalium- und Ammoniumperoxodisulfat. Die Mengen an Initiator betragen üblicherweise 0,1 bis 10 Gew.-%, vorzugsweise 0,5 bis 5 Gew.-%, bezogen auf die zu polymerisierenden Monomeren.

Das Molgewicht der Polymerisate kann vorteilhaft mit Hilfe von Polymerisationsreglern gezielt eingestellt werden, die Anwesenheit von Polymerisationsreglern ist jedoch nicht erforderlich. Als Polymerisationsregler werden vorzugsweise wasserlösliche Schwefel-, Stickstoff- und Phosphorverbindungen verwendet. Beispiele für besonders geeignete Initiatoren sind Natriumhydrogensulfit, Natriumdisulfit, Natriumsulfit, Natriumthiosulfat, Natriumhypophosphit, phosphorige Säure, Mercaptopropionsäure, Mercaptoessigsäure, Mercaptoethanol und Alkalimetallsalze der genannten Säuren. Selbstverständlich können auch Mischungen der genannten Polymerisationsregler verwendet werden. Wenn ein Polymerisationsregler eingesetzt wird, liegen die verwendeten Mengen in der Regel bei 0,1 bis 10 Gew.-%, bevorzugt bei 1 bis 5 Gew.-%, bezogen auf die zu polymerisierenden Monomere.

Die Polymerisation kann kontinuierlich oder diskontinuierlich durchgeführt werden. Bei einer Batch-Fahrweise legt man zweckmäßigerweise Wasser als Polymerisationsmedium in einem Kessel vor, der mit Mischvorrichtung, Rückflußkühler und Wasserabscheider ausgestattet ist, erhitzt es auf die Polymerisationstemperatur und gibt nach dem Starten der Polymerisation kontinuierlich oder absatzweise das Veresterungsgemisch, Initiator und gegebenenfalls Regler zu.

Die Polymerisation kann bei Normaldruck, unter erhöhtem Druck oder auch unter vermindertem Druck durchgeführt werden.

Die Polymerisation erfolgt immer unter Sieden des Reaktionsgemisches.

Das durch die azeotrope Abdestillation des organischen Lösungsmittels ständig mitabdestillierte Wasser wird zurückgeführt oder durch Zufuhr von frischem Wasser ersetzt. Dadurch wird gewährleistet, daß die Menge an Wasser im Reaktionsgemisch während der Polymerisation praktisch konstant bleibt und sich in der Regel 20 bis 70 gew.-%ige, vorzugsweise 30 bis 50 gew.-%ige, Polymerisatlösungen bilden. Das im Veresterungsgemisch vorliegende organische Lösungsmittel verteilt sich im Polymerisationsreaktor auf eine relativ große Fläche und wird daher rasch aus dem System entfernt, wodurch sich die oben genannte Gleichgewichtskonzentration einstellt.

Das Azeotrop wird wie bei der Veresterungsreaktion kondensiert und in zwei Phasen getrennt. Die organische Phase kann vorteilhaft bei der Veresterung wiederverwendet werden. Sollte eine Reinigung notwendig sein, so kann beispielsweise eine Flüssig-flüssig-Extraktion mit Wasser durchgeführt werden. Das organische Lösungsmittel kann zur Reinigung jedoch auch destilliert oder einer Wasserdampfdestillation unterzogen werden.

Bei der oben beschriebenen Batch-Fahrweise kann man die Monomeren, den Initiator und gegebenenfalls den Regler dem Reaktor in 1 bis 20 h, insbesondere in 2 bis 10 h, zuführen. Nach Beendigung der Dosierung polymerisiert man das Reaktionsgemisch üblicherweise noch 0,1 bis 10 h, bevorzugt 0,5 bis 3 h, nach. Vorzugsweise führt man die Nachpolymerisation unter Sieden des Reaktionsgemisches durch. Dabei können gegebenenfalls Reste an organischem Lösungsmittel aus dem Polymerisationsgemisch herausdestilliert werden.

Nach der Polymerisation beträgt der Anteil an organischem Lösungsmittel in der wäßrigen Polymerisatlösung vorzugsweise < 100 ppm. Nach dem erfindungsgemäßen Verfahren ist es sogar möglich, das organische Lösungsmittel vollständig aus der bei der Polymerisation erhaltenen Mischung zu entfernen, so daß die Restgehalte an organischem Lösungsmittel von 0 bis 50 ppm, meistens 1 bis 30 ppm, betragen.

Um die Raum-Zeit-Ausbeute bei der Polymerisation durch ein schnelleres azeotropes Abdestillieren des organischen Lösungsmittels zu erhöhen, kann es vorteilhaft sein, Stickstoff oder Wasserdampf durch den Polymerisationsreaktor zu leiten.

Zur Neutralisation des Acrylsäure als Comonomer enthaltenden Polymerisats kann man vor, während oder bevorzugt nach der Polymerisation eine Base zusetzen. Hierfür können alle basisch reagierenden Verbindungen verwendet werden. Geeignet sind z.B. Alkalimetalloxide, -hydroxide, -carbonate und -hydrogencarbonate, wobei die Kalium- und vor allem die Natriumverbindungen bevorzugt sind, Erdalkalimetalloxide und -hydroxide, insbesondere die Magnesium-, Calcium- und Bariumverbindungen, Aluminiumhydroxid, Eisenhydroxid, Eisenoxid, Ammoniak und Amine wie Cyclohexylamin, Dicyclohexylamin, Butylamin, Ethanolamin, Diethanolamin, Triethanolamin und Morpholin. Bevorzugt wird Natriumhydroxid, insbesondere in Form von 10 bis 50 gew.-%igen wäßrigen Lösungen, zur Neutralisation eingesetzt.

Das Molgewicht M_{w} der erfindungsgemäßen Polymerisate beträgt in der Regel 1000 bis 100 000, bevorzugt 5000 bis 50 000.

Die erfindungsgemäßen Polymerisate eignen sich hervorragend als Mahlhilfsmittel für zementöse Systeme, insbesondere für Mörtel und Beton. Die Einsatzmenge der erfindungsgemäßen Polymerisate beträgt dabei üblicherweise 0,1 bis zu 5 Gew.-%, bezogen auf das zementöse System.

Sie können dem zementösen System vor der Mahlung als Pulver, Granulat, Schmelze oder als wäßrige Lösung (meist 30 bis 60 gew.-%ig) zugemischt werden.

Bei Zumischung vor der Mahlung der gebrannten Zementklinker zeigen sie gute Eigenschaften als Mahlhilfsmittel während des Mahlprozesses und bei der mechanischen Zerkleinerung des zementösen Systems.

### Beispiele

### A) Herstellung von erfindungsgemäßen Polymerisaten

Der Umsatz bei der Veresterung wurde NMR-spektroskopisch bestimmt. Der K-Wert der Polymerisate wurde nach H. Fikentscher, Cellulose-Chemie, Band 13, Seiten 58-64 und 71-74 (1932) in wäßriger Lösung bei einem pH-Wert von 7, einer Temperatur von 25°C und einer Konzentration des Natriumsalzes des Polymerisats von 1 Gew.-% bestimmt.

### Ester 1

In einem 2 1-Reaktor mit Gaseinleitungsrohr und Wasserabscheider wurde ein Gemisch aus 500 g (0,5 mol) Methylpolyethylenglykol (M_{w} 1000), 90 g (1,25 mol) Acrylsäure, 0,2 g Phenothiazin, 6 g p-Toluolsulfonsäurehydrat und 260 g Toluol unter Durchleiten von Stickstoff 9 h auf 135°C erhitzt (Bildung von 9 g Wasser). Die Säurezahl der bei 20°C flüssigen, lagerfähigen Veresterungsmischung betrug 50 mg KOH/g.

### Ester 2

Analog zur Herstellung des Esters 1 wurde ein Gemisch aus 500 g (0,5 mol) Methylpolyethylenglykol (M_{w} 1000), 99 g (1,375 mol) Acrylsäure, 0,2 g Phenothiazin, 6 g p-Toluolsulfonsäurehydrat und 260 g Toluol umgesetzt. Die Säurezahl der bei 20°C flüssigen, lagerfähigen Veresterungsmischung betrug 58 mg KOH/g.

### Ester 3

Analog zur Herstellung des Esters 1 wurde ein Gemisch aus 500 g (0,5 mol) Methylpolyethylenglykol (M_{w} 1000), 108 g (1,5 mol) Acrylsäure, 0,2 g Phenothiazin, 6 g p-Toluolsulfonsäurehydrat und 260 g Toluol 7 h umgesetzt, bis sich kein Wasser mehr bildete. Die Säurezahl der bei 20°C flüssigen, lagerfähigen Veresterungsmischung betrug 66 mg KOH/g.

### Beispiel 1

In einem 2 1-Reaktor mit Gaseinleitungsrohr und Wasserabscheider wurden 450 g Wasser unter Durchleiten von Stickstoff bis zum Sieden erhitzt. Dann wurden gleichzeitig die Zuläufe 1 bis 3 gestartet: Zulauf 1: 400 g Ester 1; Zulauf 2: 53 g einer 8 gew.-%igen wäßrigen Natriumperoxodisulfatlösung; Zulauf 3: 27 g einer 10 gew.-%igen wäßrigen Natriumhydrogensulfitlösung. Zulauf 1 wurde in 6 h zudosiert, die Zuläufe 2 und 3 jeweils in 6,25 h.

Das Toluol wurde während der Polymerisation ständig als Azeotrop mit Wasser abdestilliert, das im Wasserabscheider in eine Wasserphase und eine Toluolphase getrennt wurde. Die Wasserphase wurde in den Polymerisationsreaktor zurückgeleitet, das Toluol wurde zur Wiederverwendung aufbewahrt. Nach Beendigung der Zuläufe wurde 1 h weiteres Wasser und restliches Toluol abdestilliert. Der Toluolrestgehalt in der Polymerisatlösung betrug < 20 ppm.

Nach Abkühlen und Neutralisation mit 30 g 50 gew.-%iger Natronlauge auf pH 7 wurde eine klare 35 gew.-%ige Polymerisatlösung erhalten. Der K-Wert des Polymerisats betrug 25.

### Beispiel 2

Es wurde analog Beispiel 1 vorgegangen, jedoch wurden folgende Zuläufe verwendet: Zulauf 1: 400 g Ester 2; Zulauf 2: 53 g einer 8 gew.-%igen wäßrigen Natriumperoxodisulfatlösung; Zulauf 3: 27 g einer 12 gew.-%igen wäßrigen Natriumhydrogensulfitlösung.
Es wurde eine 35 gew.-%ige Polymerisatlösung vom pH-Wert 7 erhalten. Der K-Wert des Polymerisats betrug 27.

### Beispiel 3

Es wurde analog Beispiel 1 vorgegangen, jedoch wurden folgende Zuläufe verwendet: Zulauf 1: 350 g Ester 3; Zulauf 2: 48 g einer 8 gew.-%igen wäßrigen Natriumperoxodisulfatlösung; Zulauf 3: 27 g einer 40 gew.-%igen wäßrigen Natriumhydrogensulfitlösung. Zur Neutralisation wurden 43 g 50 gew.-%ige Natronlauge eingesetzt. Es wurde eine 35 gew.-%ige Polymerisatlösung vom pH-Wert 6,9 erhalten. Der K-Wert des Polymerisats betrug 22.

### B) Anwendung von erfindungsgemäßen Polymerisaten

Anhand des Mörteltests gemäß DIN 1164 bzw. EN 196 wurde die Zement dispergierende Wirkung der Polymerisate aus Beispiel 1 bis 3 untersucht.

Die Einsatzmengen betrugen:
500 g Heidelberger Zement CEM I 32,5 R
1350 g CEN-Normsand
225 g Trinkwasser
0,15 Gew.-% Polymerisat, berechnet Feststoffgehalt auf die verwendete Menge Zement, d.h. 0,75 g Polymer
0,35 Gew.-% eines handelsüblichen Entschäumers auf Basis von Phosphorsäureestern, bezogen auf das Polymerisat.

In der folgenden Tabelle ist die verflüssigende Wirkung der Polymerisate auf die Mörtelmischung anhand der Ausbreitmaße nach 1, 30 und 60 min dargestellt.

| Polymerisat aus Bsp. | Ausbreitmaß in cm gemäß DIN 1164 nach | | |
|---|---|---|---|
| | 1 min | 30 min | 60 min |
| 1 | 17,3 | 17,0 | 15,7 |
| 2 | 17,7 | 18,7 | 16,4 |
| 3 | 18,2 | 18,4 | 16,1 |

## Patentansprüche

1. Verwendung von wasserlöslichen Polymerisaten von Estern aus Acrylsäure und Alkylpolyalkylenglykolen, erhältlich durch azeotrope Veresterung einer Mischung von Acrylsäure und Alkylpolyalkylenglykol im Molverhältnis von 2 bis 3 : 1 in Gegenwart eines organischen Lösungsmittels, das mit Wasser ein Azeotrop bildet, zu mindestens 85 Gew.-%, bezogen auf das Alkylpolyalkylenglykol, und anschließende radikalische Polymerisation des bei der Veresterung erhaltenen Gemisches in wäßrigem Medium, wobei man das organische Lösungsmittel während der Polymerisation azeotrop aus dem Reaktionsgemisch abdestilliert und das abdestillierte Wasser in das Gemisch zurückführt oder durch Zufuhr von frischem Wasser ersetzt, als Mahlhilfsmittel für zementöse Systeme.

2. Verwendung nach Anspruch 1, bei denen als Alkylpolyalkylenglykol ein Methylpolyalkylenglykol oder eine Mischung verschiedener Methylpolyalkylenglykole eingesetzt wird.

3. Verwendung nach Anspruch 1 oder 2, bei denen als Alkylpolyalkylenglykol ein Methylpolyethylenglykol der Molmasse M_{w} 350 bis 4000 oder eine Mischung dieser Methylpolyethylenglykole eingesetzt wird.

4. Verwendung nach den Ansprüchen 1 bis 3, bei denen der Gehalt an organischem Lösungsmittel im erhaltenen Veresterungsgemisch vor der Polymerisation < 40 Gew.-% beträgt.

5. Verwendung nach den Ansprüchen 1 bis 4, bei denen die Säuregruppen nach, während oder vor der Polymerisation zumindest teilweise mit Basen neutralisiert werden.

6. Verwendung nach den Ansprüchen 1 bis 5, bei denen die Polymerisation in Gegenwart von 0,1 bis 10 Gew.-% Polymerisationsregler, bezogen auf die zu polymerisierenden Monomere, durchgeführt wird.

## Claims

1. The use of water-soluble polymers of esters made from acrylic acid and alkylpolyalkylene glycols, obtainable by azeotropic esterification of a mixture of acrylic acid and alkylpolyalkylene glycol in a molar ratio of from 2 to 3:1 in the presence of at least 85% by weight, based on the alkylpolyalkylene glycol, of an organic solvent which forms an azeotrope with water, followed by free-radical polymerization, in an aqueous medium, of the mixture obtained during the esterification, where the organic solvent is distilled off azeotropically from the reaction mixture during the polymerization, and the water removed by distillation is returned to the mixture or replaced by a feed of fresh water, as grinding aid for cementitious systems.

2. The use according to claim 1, where the alkylpolyalkylene glycol used comprises a methylpolyalkylene glycol or a mixture of various methylpolyalkylene glycols.

3. The use according to claim 1 or 2, where the alkylpolyalkylene glycol used comprises a methylpolyethylene glycol of molecular weight M_{w} from 350 to 4000, or a mixture of these methylpolyethylene glycols.

4. The use according to any of claims 1 to 3, where the content of organic solvent in the esterification mixture obtained prior to the polymerization is ≤ 40% by weight.

5. The use according to any of claims 1 to 4, where, before, during or after the polymerization, at least some of the acid groups are neutralized with bases.

6. The use according to any of claims 1 to 5, where the polymerization is carried out in the presence of from 0.1 to 10% by weight of polymerization regulators, based on the monomers to be polymerized.

## Revendications

1. Utilisation de polymères solubles dans l'eau d'esters d'acide acrylique et d'alkylpolyalkylèneglycols, que l'on peut obtenir par estérification azéotrope d'un mélange d'acide acrylique et d'alkylpolyalkylèneglycol dans un rapport molaire de 2 à 3/1, en présence d'un solvant organique qui forme un azéotrope avec l'eau, à au moins 85 % en poids par rapport à l'alkylpolyalkylèneglycol, et polymérisation radicalaire ultérieure en milieu aqueux du mélange obtenu au cours de l'estérification, le solvant organique étant séparé par distillation azéotrope du mélange réactionnel pendant la polymérisation et l'eau distillée étant recyclée dans le mélange ou remplacée par apport d'eau fraîche, comme adjuvants de broyage pour des systèmes cimenteux.

2. Utilisation suivant la revendication 1, dans laquelle, comme alkylpolyalkylèneglycol, on met en oeuvre un méthylpolyalkylèneglycol ou un mélange de différents méthylpolyalkylèneglycols.

3. Utilisation suivant la revendication 1 ou 2, dans laquelle, comme alkylpolyalkylèneglycol, on met en oeuvre un méthylpolyéthylèneglycol de la masse molaire M_{w} de 350 à 4000 ou un mélange de ces méthylpolyéthylèneglycols.

4. Utilisation suivant les revendications 1 à 3, dans laquelle la teneur en solvant organique dans le mélange d'estérification obtenu est, avant la polymérisation, ≤ 40% en poids.

5. Utilisation suivant les revendications 1 à 4, dans laquelle les groupes acides sont au moins partiellement neutralisés par des bases après, pendant ou avant la polymérisation.

6. Utilisation suivant les revendications 1 à 5, dans laquelle la polymérisation est effectuée en présence de 0,1 à 10 % en poids de régulateur de polymérisation, par rapport aux monomères à polymériser.
